# DEMANDE DE BREVET EUROPEEN

(11) **EP 1 048 785 A1**
(43) Date de publication de la demande: **02.11.2000**
(21) Numéro de dépôt: 00401116.9
(22) Date de dépôt: 20.04.2000
(51) Int. Cl.: E01C 19/20, B60P 1/36

(54) **Dispositif d'épandage d'un matériau granulaire, en particulier pour le traitement des routes**

(30) Priorité: 27.04.1999 FR 9905312
(71) Demandeur: Pradines, René, 78800 Houilles (FR)
(72) Inventeur: Pradines, René, 78800 Houilles (FR)
(74) Mandataire: Bezault, Jean

(57) **Abrégé**

Un dispositif d'épandage d'un matériau granulaire comprend un transporteur (18) propre à acheminer le matériau depuis une trémie (14) jusqu'à un distributeur. Le transporteur (18) comprend deux câbles sans fin (28) montés en parallèle et s'enroulant chacun autour de deux poulies d'extrémité (32), des barrettes transversales parallèles (44) fixées chacune aux câbles à intervalles constants et propres à déplacer le matériau sur une surface de transport (58), et des moyens d'entraînement (32, 36) propres à déplacer les câbles en synchronisme. Application notamment au traitement hivernal des routes.

## Description

L'invention se rapporte à l'épandage de matériaux granulaires, en particulier de matériaux de sablage ou de salage pour le traitement hivernal des routes,ou encore de matériaux pour la construction ou la réparation des routes.

Elle concerne plus particulièrement un dispositif d'épandage d'un matériau granulaire, comprenant un transporteur propre à acheminer le matériau depuis une trémie jusqu'à un distributeur.

On connaît déjà des dispositifs de ce type qui sont destinés soit à être portés, soit à être tractés par un camion ou analogue. Le matériau granulaire, qui est par exemple du sel, du sable, des gravillons, etc, et qui est contenu dans la trémie, est acheminé par le transporteur jusqu'au distributeur. Celui-ci est généralement réalisé sous la forme d'un distributeur à disque, placé à l'arrière du camion, pour épandre le matériau sur la route à traiter.

Dans les dispositifs connus de ce type, le transporteur comprend habituellement un tapis souple sans fin placé dans une position sensiblement horizontale. Ce tapis doit être entraîner par des moyens moteurs puissants. De plus, il doit être particulièrement résistant pour encaisser les efforts importants qu'il subit.

On connaît aussi des dispositifs de ce type, dans lesquels le transporteur comprend une vis sans fin ou analogue présentant un axe sensiblement horizontal. Là aussi, le dispositif nécessite des moyens d'entraînement puissants pour réaliser la rotation de la vis sans fin.

Dans tous les cas, le transporteur doit être particulièrement résistant pour travailler dans un milieu particulièrement agressif.

L'invention a notamment pour but d'apporter une solution aux problèmes ci-dessus.

Elle propose à cet effet un dispositif d'épandage du type défini en introduction, dans lequel le transporteur comprend deux câbles sans fin montés en parallèle et s'enroulant chacun autour de deux poulies d'extrémité, des barrettes transversales parallèles fixées chacune aux câbles à intervalles constants et propres à déplacer le matériau sur une surface de transport, et des moyens d'entraînement propres à déplacer les câbles en synchronisme.

Ainsi, le transporteur de l'invention comprend essentiellement des barrettes parallèles entraînées par des câbles sans fin et acheminant le matériau depuis la trémie jusqu'au distributeur.

Ce sont donc ces câbles et ces barrettes qui encaissent les efforts mécaniques élevés du transporteur. Ils peuvent être réalisés dans un matériau possédant une résistance mécanique élevée, par exemple en acier inoxydable.

Selon une autre caractéristique de l'invention, les barrettes sont fixées aux câbles par des organes de fixation propres à venir s'engager dans des logements de forme adaptée ménagés en périphérie de l'une au moins des poulies.

Ainsi, ces poulies s'apparentent à des engrenages qui assurent l'entraînement des câbles par coopération avec les organes de fixation des barrettes.

Dans une forme de réalisation de l'invention, chacun des organes de fixation est un cavalier comprenant deux branches réunies par un coude en U, tandis que les logements précités ont une forme adaptée pour recevoir chacun le coude en U d'un organe de fixation.

Dans une autre forme de réalisation de l'invention, chacun des organes de fixation comprend une plaquette de serrage munie d'un tenon cylindrique, tandis que les logements ont une forme adaptée pour recevoir chacun le tenon d'un organe de fixation.

La surface de transport du dispositif de l'invention peut être une surface fixe sensiblement horizontale au-dessus de laquelle se déplacent les barrettes. En ce cas, ces barrettes viennent racler la surface de transport pour assurer le déplacement du matériau granulaire.

Cette surface de transport constitue avantageusement le fond de la trémie et elle s'étend jusqu'au distributeur.

Dans une autre forme de réalisation, les barrettes et les câbles sont fixés à un tapis continu déformable qui constitue la surface de transport.

Toutefois,- dans cette forme de réalisation, le tapis n'encaisse aucun effort, puisque ce sont toujours les câbles et les barrettes qui assurent la résistance mécanique à l'entraînement.

Dans tous les cas, la trémie comprend avantageusement une paroi munie d'une ouverture calibrée par laquelle passe le transporteur. Il en résulte que celui-ci achemine une quantité dosée de matériau, dépendant de la section de l'ouverture calibrée et de la vitesse linéaire du transporteur.

Les moyens d'entraînement comprennent avantageusement au moins un axe moteur sur lequel sont calées deux poulies propres à entraîner les deux câbles en synchronisme.

Avantageusement, chaque câble s'enroule autour d'une poulie de tension.

Dans la description qui suit, faite seulement à titre d'exemple, on se réfère aux dessins annexés, sur lesquels :
- la figure 1 est une vue de côté d'un dispositif d'épandage selon l'invention ;
- la figure 2 est une vue arrière prise dans la direction de la flèche II de la figure 1 ;
- la figure 3 est une vue latérale partielle d'un transporteur selon une première forme de réalisation de l'invention;
- la figure 4 est une vue latérale d'un transporteur selon une deuxième forme de réalisation de l'invention ;
- la figure 5 est une vue d'extrémité avec coupe partielle du transporteur de la figure 4 ;
- la figure 6 est un détail à échelle agrandie de la figure 4 ;
- la figure 7 est une vue partielle analogue à la figure 6 dans une variante de réalisation ;
- la figure 8 est une vue analogue à la figure 7 dans une autre variante ;
- la figure 9 est une vue en coupe selon la ligne IX-IX de la figure 8 ; et
- la figure 10 est une vue de dessus correspondant à la figure 8.

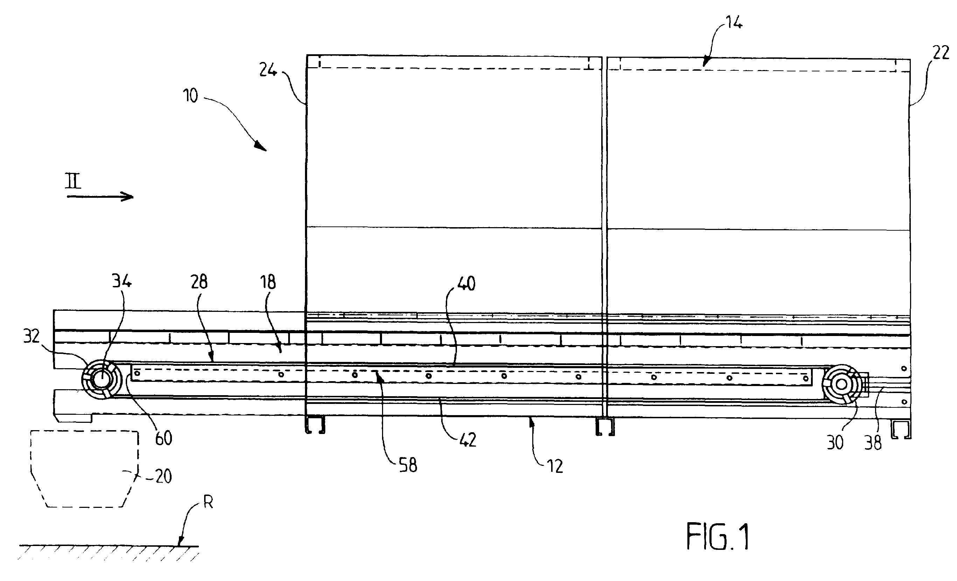

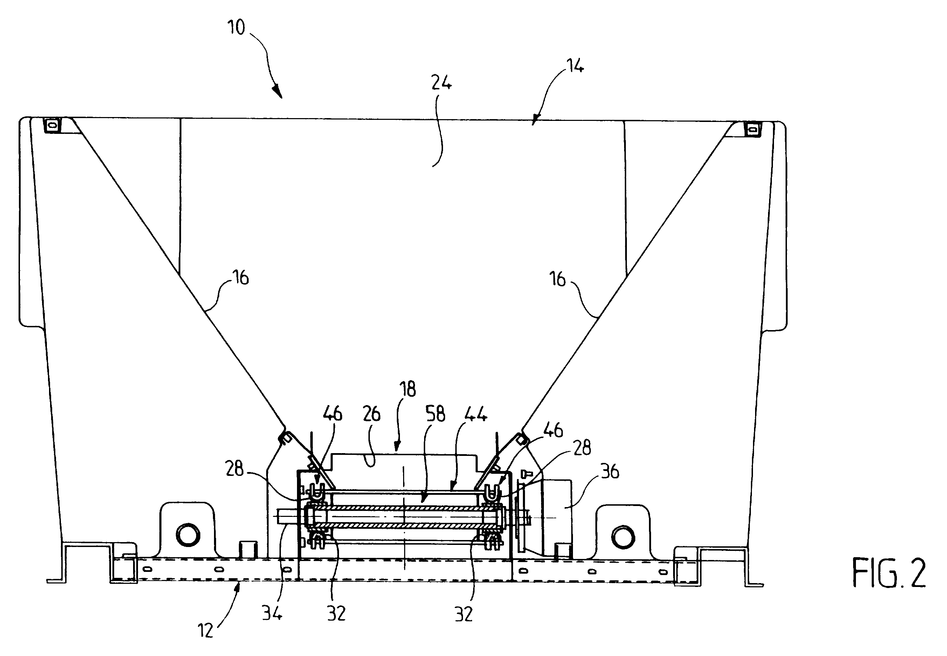

On se réfère d'abord aux figures 1 et 2 qui montrent un dispositif d'épandage 10 selon l'invention propre à être placé sur un véhicule tel qu'un camion ou sur une remorque tractée. Le dispositif 10 comprend un châssis 12 portant une trémie 14 disposée vers l'avant dudit châssis. Cette trémie est destinée à contenir un matériau granulaire tel qu'un matériau de salage ou de sablage (sel, sable, etc) ou un matériau destiné à l'entretien ou à la réparation de routes (gravillon, etc).

La trémie 14 affecte, en section transversale, une forme sensiblement trapézoïdale (figure 2) limitée par deux parois inclinées 16 débouchant vers un transporteur 18 qui contribue à constituer le fond de la trémie 14. Ce transporteur 18 est destiné à acheminer le matériau granulaire depuis la trémie 14 jusqu'à un distributeur 20 placé à l'arrière du châssis et représenté schématiquement sur la figure 1. Ce distributeur peut comporter par exemple un disque rotatif d'axe vertical, alimenté par une vis sans fin ou analogue, et propre à répandre le matériau sur une route R. La trémie 14 comprend une paroi antérieure fermée 22 et une paroi postérieure ouverte 24 munie d'une ouverture calibrée 26 par laquelle passe le transporteur 18.

Le transporteur 18 comprend deux câbles sans fin 28 montés en parallèle et s'enroulant chacun autour de deux poulies d'extrémité : une poulie antérieure 30 disposée vers l'avant de la trémie et une poulie postérieure 32 disposée à proximité du distributeur 20. Les deux poulies 32 sont calées sur un axe moteur 34 disposé horizontalement et transversalement par rapport au châssis 12. Cet axe moteur 34 est entraîné en rotation par un moteur 36 porté par le châssis 12 (figure 2).

Les poulies 30 constituent des poulies de tension et sont sollicitées chacune par un moyen de rappel 38 approprié. Ainsi, chaque câble 28 comprend deux segments principaux qui s'étendent sensiblement à l'horizontale : un segment supérieur 40 et un segment inférieur 42 (figure 1).

Les câbles 28 sont réalisés en acier, avantageusement en acier inoxydable, et sont de préférence du type multibrins pour leur conférer une meilleure souplesse. En variante, ils peuvent être aussi bien réalisés dans une matière synthétique de propriétés mécaniques comparables à celles de l'acier.

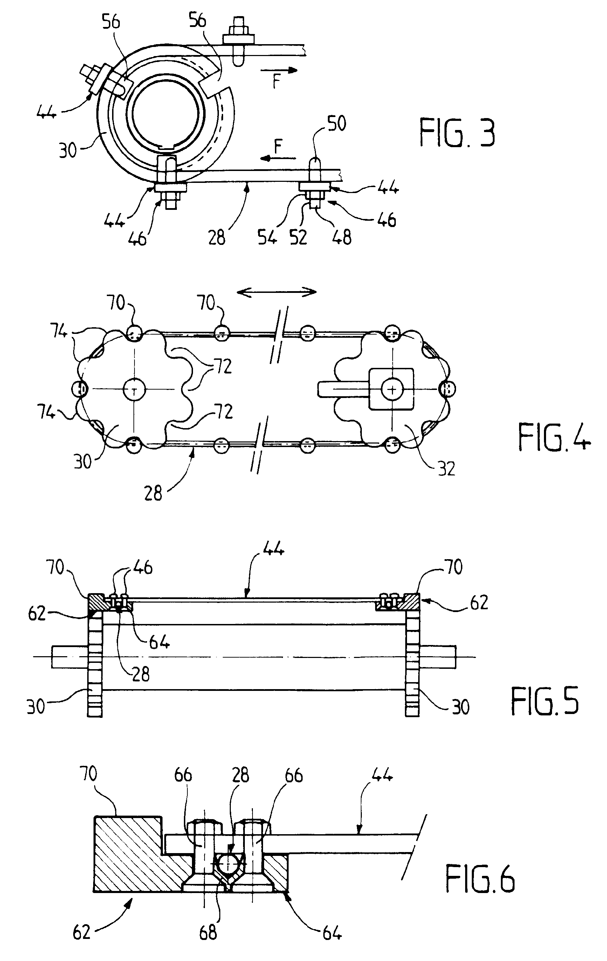

Le transporteur 18 comprend en outre, une pluralité de barrettes transversales 44 qui s'étendent parallèlement entre elles et qui sont fixées chacune aux câbles 28 à intervalles constants (figures 2 et 3). Ces barrettes sont avantageusement réalisées en acier inoxydable, ou encore dans une matière synthétique de propriétés mécaniques comparables à celles de l'acier.

Dans la forme de réalisation des figures 1 à 3, chacune des barrettes est fixée à chaque câble par un organe de fixation 46 réalisé sous la forme d'un cavalier. Ce cavalier comprend deux branches 48 réunies par un coude en U 50 et traversant la barrette. Chacune des branches comporte une extrémité filetée 52 propre à recevoir un écrou 54.

Ainsi, le câble peut être enserré dans le logement défini entre l'intérieur du coude en U 50 et l'extrémité de la barrette 44. Les cavaliers sont orientés de telle sorte que le coude en U 50 soit dirigé vers l'intérieur et la barrette disposée vers l'extérieur des câbles (figure 3). L'une au moins des poulies, par exemple la poulie 30 de la figure 3, comporte des logements 56 formés en périphérie. Dans l'exemple, ces logements 56 sont au nombre de trois et disposés à des intervalles angulaires de 120°. Ils sont aménagés pour recevoir à chaque fois le coude en U 50 d'un cavalier 46 afin de constituer une sorte de roue d'engrenage sur laquelle s'enroule à chaque fois l'un des câbles 28.

On comprendra que lorsque le moteur 36 est entraîné en rotation, les deux câbles et les barrettes se déplacent dans le sens indiqué par les flèches F de la figure 3.

Dans la forme de réalisation des figures 1 à 3, la trémie comporte en outre une surface de transport 58 qui est disposée approximativement au même niveau et entre les brins supérieurs 40 des deux câbles 28. Il en résulte que les barrettes 46 viennent racler cette surface 58 pour déplacer progressivement le matériau granulaire depuis la trémie jusqu'au distributeur 20. Cette surface de transport 58 (figure 1) s'étend sous la trémie 14 et jusqu'au distributeur 20. Le matériau est ainsi déplacé jusqu'à l'extrémité arrière 60 de la surface de transport 58 et il s'écoule ensuite par gravité pour être pris en compte par le distributeur 20.

On se réfère maintenant aux figures 4 à 7 pour décrire une autre forme de réalisation de l'invention, qui s'apparente à la précédente, si ce n'est que chacune des barres 44 est fixée aux câbles 28 par des organes de fixation différents.

Dans cet exemple, chaque organe de fixation 62 (figures 5 et 6) comprend une plaquette de serrage 64 propre à être fixée à une extrémité de la barrette par l'intermédiaire de deux ensembles vis-écrous 66, tout en définissant un logement 68 pour le passage du câble. Ainsi, lorsque les deux ensembles vis-écrous 66 sont serrés, le câble est maintenu enserré entre la plaquette 64 et l'extrémité de la barrette 44. La plaquette de serrage 64 est munie d'un tenon cylindrique 70 qui s'étend au-delà de l'extrémité de la barrette et qui est propre à venir s'engager dans des logements 72, de forme adaptée, que ménage chacune des poulies 30 et 32 (figure 4).

Dans l'exemple, chacune des poulies comprend huit logements 72 espacés à 45° les uns des autres et séparés deux à deux par une dent 74. Ainsi, chacune des poulies 30 et 32 s'apparente à une roue d'engrenage et vient coopérer avec les tenons cylindriques 70. En variante, l'une des poulies seulement, de préférence la poulie 30 sollicitée par le moyen de rappel 38, est engrenante tandis que l'autre poulie 32 est à surface lisse.

Dans la forme de réalisation des figures 4 à 7, les barrettes viennent également racler une surface de transport 58 analogue à celle décrite précédemment.

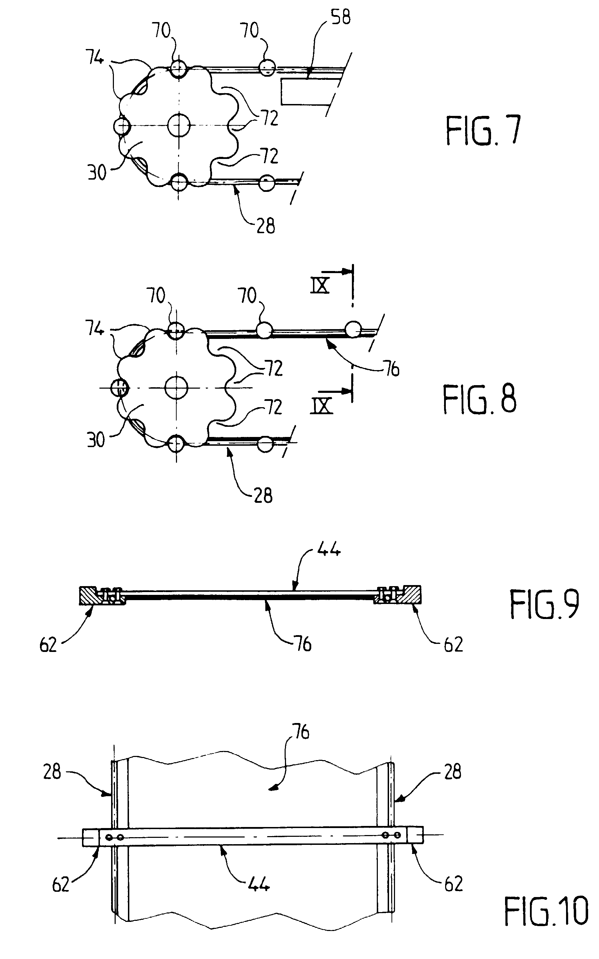

On se réfère maintenant à la forme de réalisation des figures 8 à 10, qui s'apparente à celle des figures 4 à 7. Cela signifie que les barrettes sont fixées aux câbles par des organes de fixation 62 analogues à ceux décrits précédemment.

La différence principale réside dans le fait que la surface de transport est ici constituée par un tapis continu déformable 76, réalisé par exemple en caoutchouc. Comme on peut le voir sur les figures 8 à 10, ce tapis est disposé à l'intérieur des câbles et il est fixé essentiellement aux barrettes par des moyens mécaniques appropriés.

Il en résulte que le matériau est entraîné en combinaison par le tapis 76 et les barrettes 44. Toutefois, comme ce tapis est entraîné par les barrettes et les câbles, il n'a pas besoin de présenter une résistance mécanique aussi élevée que les tapis de la technique antérieure, lesquels encaissaient tous les efforts mécaniques d'entraînement.

Bien entendu, il est possible aussi, dans la forme de réalisation des figures 1 à 3, de remplacer la surface de transport 58 par un tapis souple analogue au tapis souple 76 de la forme de réalisation des figures 8 à 10.

Dans tous les cas, le matériau est entraîné par le transporteur 18 et le débit de ce matériau peut être ajusté en jouant sur la vitesse linéaire du transporteur et sur la section de l'ouverture calibrée 26 de la trémie.

Bien entendu, l'invention n'est pas limitée aux formes de réalisation décrites précédemment à titre d'exemple et s'étend à d'autres variantes.

L'essentiel est que le dispositif comprend des moyens d'entraînement par câble supportant des barrettes transversales qui servent à acheminer le matériau, en combinaison avec une surface de transport.

Il est à noter que dans certains cas, en particulier pour des machines de petites tailles, il pourrait être envisagé de n'utiliser qu'un seul câble supportant des barrettes transversales montées parallèles les unes aux autres et à intervalles sensiblement constants. Ce câble s'enroulerait autour de poulies d'extrémité 30 et 32, de manière à déplacer le matériau sur une surface de transport.

Le dispositif de l'invention trouve une application essentielle au traitement hivernal des routes pour en assurer le salage ou le sablage. Il peut être utilisé aussi pour assurer la construction ou l'entretien des routes, par exemple pour épandre des gravillons ou matériau analogue.

Bien qu'il soit question ci-dessus de l'épandage d'un matériau granulaire, il est clair que l'invention s'applique aussi à l'épandage d'un ou plusieurs matériaux granulaires, accompagnés, le cas échéant, d'une phase liquide, notamment pour humidifier le ou les matériaux granulaires.

## Revendications

1. Dispositif d'épandage d'un matériau granulaire, notamment pour le traitement des routes, comprenant au moins un transporteur (18) propre à acheminer le matériau depuis une trémie (14) jusqu'à un distributeur (20),
caractérisé en ce que le transporteur (18) comprend deux câbles sans fin (28) montés en parallèle et s'enroulant chacun autour de deux poulies d'extrémité (30, 32), des barrettes transversales parallèles (44) fixées chacune aux câbles à intervalles constants et propres à déplacer le matériau sur une surface de transport (58, 76), et des moyens d'entraînement (32, 36) propres à déplacer les câbles en synchronisme.

2. Dispositif selon la revendication 1, caractérisé en ce que les barrettes (44) sont fixées aux câbles (28) par des organes de fixation (46 ; 62) propres à venir s'engager dans des logements (56 ; 72) de forme adaptée ménagés en périphérie de l'une au moins des poulies (30, 32).

3. Dispositif selon la revendication 2, caractérisé en ce que chacun des organes de fixation est un cavalier (46) comprenant deux branches (48) réunies par un coude en U (50), et en ce que les logements (56) ont une forme adaptée pour recevoir chacun le coude en U (50) d'un organe de fixation.

4. Dispositif selon la revendication 2, caractérisé en ce que chacun des organes de fixation comprend une plaquette de serrage (64) munie d'un tenon cylindrique (70), et en ce que les logements (72) ont une forme adaptée pour recevoir chacun le tenon cylindrique (70) d'un organe de fixation.

5. Dispositif selon l'une des revendications 1 à 4, caractérisé en ce que la surface de transport est une surface fixe sensiblement horizontale (58) au dessus de laquelle se déplacent les barrettes (44).

6. Dispositif selon la revendication 5, caractérisé en ce que la surface de transport (58) constitue le fond de la trémie et s'étend jusqu'au distributeur (20).

7. Dispositif selon l'une des revendications 1 à 4, caractérisé en ce que les barrettes (44) et les câbles (28) sont fixés à un tapis continu déformable (76) qui constitue la surface de transport.

8. Dispositif selon l'une des revendications 1 à 7, caractérisé en ce que la trémie (14) comprend une paroi (24) munie d'une ouverture calibrée (26) par laquelle passe le transporteur (14).

9. Dispositif selon l'une des revendications 1 à 8, caractérisé en ce que les moyens d'entraînement comprennent au moins un axe moteur (34) sur lequel sont calées deux poulies (32) propres à entraîner les deux câbles en synchronisme.

10. Dispositif selon l'une des revendications 1 à 9, caractérisé en ce que chaque câble (28) s'enroule autour d'une poulie de tension (30).
